(19)

Europäisches
Patentamt
European
Patent Office
Office européen
des brevets

(11)  **EP 2 952 861 A1**

(12)  **EUROPEAN PATENT APPLICATION**

(43) Date of publication:
**09.12.2015  Bulletin 2015/50**

(51) Int Cl.:
**G01J 1/42** (2006.01)      **G01J 1/58** (2006.01)

(21) Application number: **15001590.7**

(22) Date of filing: **27.05.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **03.06.2014  CZ 20140383**

(71) Applicant: **Fyzikální ústav AV CR, v.v.i.
18221 Praha 8 (CZ)**

(72) Inventors:
• **Miura, Taisuke
  163 00 Prague 6 - Repy (CZ)**
• **Nagisetty, Siva Sankar
  182 00 Prague 8 (CZ)**
• **Mocek, Tomas
  120 00 Prague 2 (CZ)**

(54)  **APPARATUS AND METHOD FOR SINGLE SHOT MEASUREMENT OF THE M2 PARAMETER OF A LASER BEAM**

(57)      The invention provides an apparatus and method for single shot measurement of laser beam (1) quality parameter $M^2$, wherein the measured laser beam (1) having the wavelength in the VIS, IR or UV spectral region is focused by the focusing optics system (3) and enters an imaging body (5) so that the caustic beam waist of the focused measured laser beam (1) is located within the imaging body material, said imaging body (5) being made of a material showing luminescence in the wavelength range of the measured laser beam (1) and having at least one planar base substantially perpendicular to the propagation axis of the measured laser beam (1), the minimum cross-sectional dimension ($a$) of said base being bigger or equal to the diameter ($d_0$) of the laser beam (1) entering the apparatus ($a \geq d_0$), and said imaging body (5) further having at least one planar side substantially parallel with the propagation axis of the measured laser beam (1), whereas said planar base and said planar side share one edge in common and are polished into optically transparent planes, whereas a luminescence pattern is formed in said imaging body (5), and said luminescence pattern is detected and assessed.

EP 2 952 861 A1

## Description

<u>Field of Art</u>

The present invention relates to an apparatus for a single shot (i.e., by a single laser pulse) measurement of the M$^2$ parameter, representing a mode quality parameter, of a laser beam without the need for use of mechanical moving components for changing the measuring position.

<u>Background Art</u>

One of the basic parameters for laser beam applications is the quality of the obtained focal spot. The focal spot of real laser systems is never a single point, but it has a shape of so-called caustic (a spatial body formed as an envelope of approximation of geometrical optics for real beams). The narrowest part of the caustic is usually referred to as beam waist, and roughly corresponds to the focal spot in geometrical optics approximation. The caustic shape of the ideal Gaussian beam depends on the laser beam parameters (the beam size is characterized by its diameter $d_0$, wavelength $\lambda$, and divergence $\Theta_0$) and the focusing optics used (lens focal distance $f$ and aperture D).

The following relation applies for the area size in the beam waist measured perpendicular to the propagation axis:

$$d_f \approx \frac{\lambda}{\pi d_0} f = \theta_0 f$$

In real astigmatic beams, the waist position can differ for various coordinates, thus, the measurement is generally carried out in two mutually perpendicular directions - vertical and horizontal components.

The parameter M$^2$ is one of basic parameters characterizing the quality of the laser beam wavefront profile which is in a close relationship with the quality of a realizable focus. M$^2$ is the ratio of the beam parameter product of an actual beam to that of an ideal Gaussian beam at the same wavelength. It is often referred to as the beam quality parameter, since its value can be used to quantify the degree of variation of the actual beam from an ideal beam. M$^2$ is defined by the following relation:

$$M^2 = \frac{\pi}{4\lambda} d_f \theta_f,$$

wherein $\lambda$ is wavelength of the laser radiation used, $d_f$ is diameter of the beam waist, $\Theta_f$ is divergence angle of the beam after passing through the focusing optics measured from the propagation axis, which is dependent on the primary diameter $d_0$ of the laser beam and the focal distance $f$ of the focusing optics.

$$\theta_f = \frac{d_0}{f}$$

When the M$^2$ value is 1, the focal spot size depends only on the wavelength $\lambda$ and divergence angle $\Theta$, which are the basic parameters of each laser system. Hence, when the M$^2$ value is 1, it is assumed that the laser source setup is optimal and the additional disturbing effects of system instrumentation are eliminated.

A basic conventional method of M$^2$ measurement is stepwise measuring of the caustic area cross-sectional size (measured in a plane perpendicular to the propagation axis) in the proximity of beam waist. With regard to the importance of the M$^2$ parameter, this method is described in detail in ISO11146. The measuring system is coaxial with the laser beam propagation axis, and contains focusing optics and a detector, the mutual position of which is variable (movable). In order to come to a relevant assessment, at least ten values of the caustic area cross-sectional size in the proximity of the beam waist are necessary, whereas at least half of the measurements should be located within the Rayleigh length $R_f$ from the beam waist in both directions. The other half of the measurements should be located within double the Rayleigh length $R_f$ from the beam waist in both directions.

The Rayleigh length $R_f$ is defined as the length measured along the beam propagation axis where the caustic cross-sectional area is doubled in relation to the beam waist cross-sectional area.

$$R_f = \frac{\pi d_f^2}{\lambda}$$

The double Rayleigh length $R_f$ corresponds to the confocal parameter, whereas the Rayleigh length is directly proportional to the beam waist cross-sectional area and indirectly proportional to wavelength. Thus, the Rayleigh length is shorter when the focused beam diameter is smaller. The shortening of the Rayleigh length results in higher demands on the precision of focal plane setup.

An improvement of the conventional method by using Shack-Hartmann wavefront sensor is described, e.g., in J. V. Sheldakova et al: Beam quality measurements with Shack-Hartmann wavefront sensor and M2-sensor: comparison of two methods, Proc. SPIE 6452, pp. 645207, 2007, but this improvement still requires the mechanical movability of the detector in relation to focusing optics.

An apparent drawback of the conventional solution (as well as of the improvement) is the presence of movable components which may result in a systematic error and the intrinsic need for repeated measurements which is particularly undesirable in pulsed laser systems. Thus, the research activities are focused on developing solutions that do not require mutual movability of the optical and detection elements, and on possibilities of evaluating the $M^2$ parameter from a single shot measurement.

The single-step measurements known in the art utilize various physical principles, such as gradual splitting and measurement of beam parts (e.g., A. M. Carry et al: Instantaneous Measurement of M2 Beam propagation ration in real time, Ophir Photonics; J. A. Ruff: Single-pulse laser beam quality measurements using a CCD camera system, Applied Optics, Vol. 31 (1992), No. 24; CN101393050A), diffraction patterns (e.g. R. Cortés: Laser beam quality factor measured by distorted fresnel zone plates, Rev. Mex. Fis., 54 (2008), JP2006054480A) or interference patterns (US 8,427,633). All these methods require a rather complex assessment system and very precise manufacturing of optical elements used in the measure.

The present invention is based on a method of measurement of the $M^2$ laser beam parameter on the basis of the transverse radiation scattering which is described in, e.g., K. C. Jorge et al: Real-time measurement of laser beam quality factor (M2) by imaging transverse scattered radiation, Proc. SPIE Vol. 6452 (2007). This article describes and verifies the $M^2$ parameter measurement using radiation scattered in a scattering cell containing a liquid medium ensuring a homogenous radiation scattering whereas the radiation scattering pattern is recorded by a CCD camera. The specific arrangement of the optical system yields a complex information about the spatial shape of the caustic in an image recorded in a single direction. The measurement accuracy of this method was verified using a He-Ne laser emitting radiation in the VIS spectral region, which is important with regard to the photodetector spectral sensitivity (the radiation wavelength remains constant during scattering).

The limitation of the above-described method of measuring the $M^2$ laser beam parameter to the VIS spectral region is a fundamental drawback. Other drawbacks include a demanding preparation and maintenance of the scattering medium quality. These drawbacks are overcome by the present invention.

Disclosure of the invention

The present invention provides an apparatus for a single shot measurement of a laser beam quality parameter $M^2$ without the need for positional change of the photodetector in relation to focusing optics, which contains:

- a focusing optical system for focusing the laser beam into an imaging body; whereas in a preferred embodiment, the depth of field of the focusing optical system is bigger or equal to the primary laser beam diameter;

- an imaging body, which is preferably bulk, having the following properties:

  - the imaging body material shows luminescent properties in the range of the measured laser beam wavelength, whereas the luminescence is detectable for the measured laser beam output, and has a damage threshold higher than the measured laser beam power output;

  - the imaging body has a shape with at least one planar base, the minimum cross-sectional dimension $a$ of which is bigger or equal to the diameter $d_0$ of the laser beam entering the apparatus ($a \geq d_0$) and one planar side plane of the mantle which extends from an edge common to the base and the side plane, said base having the length corresponding to at least $a$, and the length of the side plane is preferably at least 3x $R_f$, whereas both these planar surfaces are polished to form optically transparent planes;

  - in a preferred embodiment, the shape of the imaging body is such that a prism having the dimensions $a$ x $a$ x $b$ can be inscribed into the imaging body, wherein $a \geq d_0$ and optionally $b \geq 3xR_f$;

  - in a preferred embodiment, the imaging body material is selected from photosensitive glass, transparent ceramics or a monocrystal with ion doping. A skilled person will appreciate that the doping ions and their concentration should be selected so that they ensure minimum detectable luminescence caused by the measured laser beam to be detected by a photodetector (e.g., CCD or CMOS detector). Such selection can be done by a skilled person, based on the standard knowledge in the field.

- a photodetector with a spatial resolution for recording the luminescence induced by the incidental measured focused laser beam in the imaging body;

  - in a preferred embodiment, the photodetector resolution is at least 10 pixels detecting the luminescence image which are arranged in the direction parallel with the measured laser beam propagation axis;
  in a preferred embodiment, the photodetector is a CCD camera or CMOS or a pixel detector array.

The apparatus may preferably further comprise an assessment unit for the analyses and assessment of the luminescence patterns.

In a preferred embodiment, the apparatus comprises an imaging optical system for transmission of the luminescence pattern onto the photodetector surface.

In another preferred embodiment, the apparatus further comprises on the input a beam splitter for regulation of the laser power output entering the apparatus.

In yet another preferred embodiment, the apparatus comprises a switching unit for synchronization of the photodetector with the measured laser beam pulses.

The refresher frequency of the measurement is determined by the photodetector rate, the luminescence lifetime and imaging body relaxation corresponds approximately to $10^{-8}$ s.

In one embodiment, luminescence is selected from one or more of fluorescence, scintillation, upconversion.

The wavelength of the measured laser beam and the selection of the spectral sensitivity of the photodetector affect the selection of a suitable material for the imaging body in order for the absorption and emission spectra to correspond to the input parameters. Suitable combinations are known in the art, and examples are shown in the following summary.

Suitable imaging body materials include, e.g.:

Glasses: BK7, fused silica, fluorophosphate, fluorozirconate, fluorosilicate, fused quartz, phosphate glass, phosphosilicate glass, sodium silicate, tellurite glass, chalcogenide glass, germanium glass, borosilicate glass, sodium-potassium glass, borophosphoric-sodium glass.

Ceramics and crystals: silicate oxyfluoride glass-ceramic, germanate-oxyfluoride glass-ceramic, tellurite-oxyhalide glass-ceramic, yttrium aluminium garnet (YAG), saphire, yttria, magnesium aluminate spinel, lutetium aluminim garnet (LuAG), sesquioxides, calcium-fluoride, yttrium aluminium perovskite (YAP).

Suitable dopants include, e.g., for the IR wavelength range (800 nm to 11 $\mu$m, predominantly upconversion mechanism): rare earths such as Y, La, Pr, Nd, Sm, Eu, Gd, Ho, Er, Tm, Yb, Ce; for the VIS wavelength range (400 nm to 800 nm, predominantly upconversion, fluorescence mechanism): metal nanoparticles such as Zn, Cr, Ag, Au, Al, Pb, Sn, Ti, lanthanoids such as La, Er, Yb, etc., actinoids such as Th, etc.; for the UV wavelength range (100 nm to 400 nm), EUV, X-ray (predominantly fluorescence, scintillation mechanism): rare earths such as Y, La, Pr, Nd, Sm, Eu, Gd, Ho, Er, Tm, Yb, Ce), metals (e.g., Zn, Cr, Au, Ag, Ti, Al, Pb, Sn, etc.), lanthanoids (e.g., La, Er, Yb, etc.), actinoids (e.g., Th, etc.).

The present invention provides a method for single shot measurement of the laser beam quality parameter $M^2$ without the need for positional change of the photodetector in relation to focusing optics, wherein the measured laser beam in the VIS, IR or UV spectral region is focused into an imaging body in which a luminescence pattern is formed, and said luminescence pattern is detected and evaluated.

More particularly, the measured laser beam having the wavelength in the VIS, IR or UV spectral region is focused by the focusing optics system and enters an imaging body so that the caustic beam waist of the focused measured laser beam is located within the imaging body material, said imaging body being made of a material showing a detectable luminescence in the wavelength range of the measured laser beam and having at least one planar base substantially perpendicular to the propagation axis of the measured laser beam, the minimum cross-sectional dimension $a$ of said base being bigger or equal to the diameter $d_0$ of the laser beam entering the apparatus ($a \geq d_0$), and said imaging body further having at least one planar side substantially parallel with the propagation axis of the measured laser beam, the dimension $b$ of said side in the direction of the propagation axis of the measured laser beam being preferably equal or bigger than triple Rayleigh length ($b \geq 3x\ R_f$), whereas said planar base and said planar side share one edge in common and are polished into optically transparent planes, whereas a luminescence pattern is formed in said imaging body, and said luminescence pattern is detected and evaluated.

During the measurement, the focused measured laser beam thus enters an imaging body in which the wavelengths of the entering radiation are converted by the luminescence (e.g., upconversion, fluorescence or scintillation) effect into wavelengths corresponding to the photodetector sensitivity.

The measured laser beam passes through the focusing optics system and enters the imaging body through its planar base, the minimum cross-sectional dimension of which $a \geq d_0$, and the material thereof shows a detectable luminescence effect for the measured laser beam wavelength. The luminescence pattern is then recorded by the photodetector with a corresponding spatial resolution. In the measurement according to the invention, the caustic beam waist of the focused measured laser beam is located within the imaging body material volume. The preferred dimension $b$ of the planar side of the imaging body ensures that the caustic of the focused beams within the imaging body volume has a minimum length of triple the Rayleigh length $R_f$, as required presently by the ISO norm.

The luminescence pattern is then preferably analyzed and evaluated by an assessment unit, the outcome of which is the laser beam quality parameter $M^2$.

The parameter $M^2$ characterizes the quality of the measured laser beam. From the obtained luminescence pattern, the cross-sectional dimension $d_f$ in various points of the caustic is obtained (according to ISO11146) and $M^2$ is calculated as follows:

$$M^2 = \frac{\pi}{4\lambda} d_f \theta_f$$

wherein the parameter $\Theta_f$ is determined by the focusing optics properties in the apparatus.

Brief description of drawings

The invention will be further explained using the drawings which show:

Fig. 1 shows schematically the arrangement of a classical apparatus for measuring the laser beam quality parameter $M^2$ (state of the art).
Fig. 2 shows schematically the arrangement of an apparatus for measuring the laser beam quality parameter $M^2$ according to the invention.
Figs. 3a-f represents examples of the shape of the imaging body while maintaining the conditions defined above.

Examples of carrying out the Invention

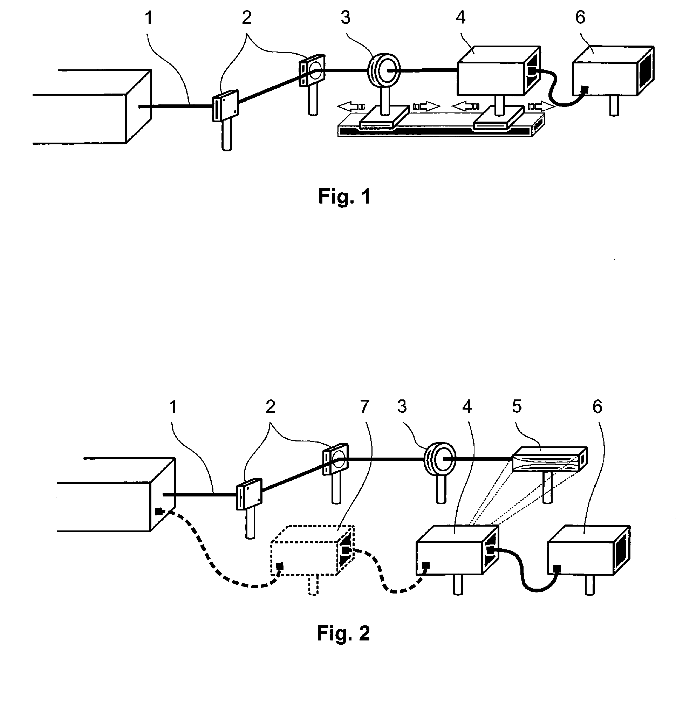

Fig. 1 shows a classical, commercially available apparatus for measuring the laser beam quality parameter $M^2$ (state of the art). The apparatus consists from a measured laser beam 1 source, a mirror system 2 for directing the beam onto focusing optics 3 which can be moved in the direction of the propagation axis of the measured laser beam 1, and a photodetector 4 with spatial resolution which can also be moved in the direction of the propagation axis of the measured laser beam 1. By moving the focusing optics 3 and the photodetector 4 relative to each other, the caustic shape is measured stepwise, and subsequently it is evaluated by an assessment unit 6 which typically consists of a computer with a suitable software.

Fig. 2 shows schematically an apparatus according to the invention. Technically analogical elements are represented by the same reference numbers as in Fig. 1.

In contrast to the classical apparatus known in the art, the apparatus according to the invention comprises a modified (state of art) focusing optics system 3. The focused measured laser beam 1 then enters an imaging body 5 in which the wavelengths of the entering radiation are converted by the luminescence (e.g., upconversion, fluorescence, and/or scintillation) effect into wavelengths corresponding to a photodetector 4 sensitivity. The luminescence pattern formed in the imaging body 5 is recorded (detected) by the photodetector 4 and subsequently analyzed and evaluated by an assessment unit 6 which typically comprises a computer with suitable software. In a preferred embodiment, the apparatus further comprises a switching unit 7 for synchronization of the photodetector with the measured laser pulses.

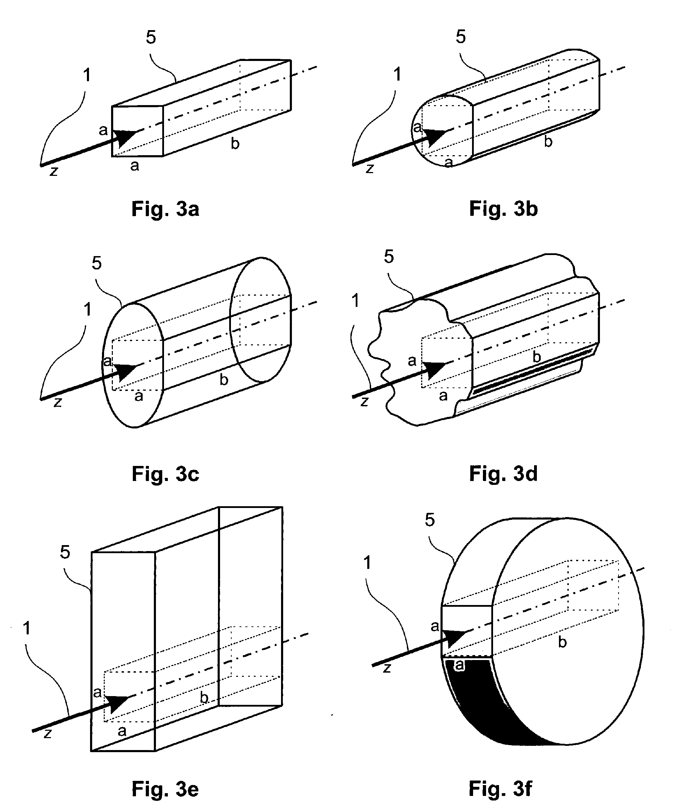

Figures 3a to 3f show examples of possible shapes of the imaging body 5 which must fulfill the conditions imposed according to the invention. The imaging body 5 can have substantially any shape, but the measured laser beam 1 must enter the imaging body 5 through a planar, optically transparent base ($a$ x $a$) which is perpendicular to the propagation axis of the beam. The minimum cross-sectional dimension $a \geq d_0$ of the base is bigger or equal to the diameter $d_0$ of the laser beam 1. Furthermore, the formed luminescence pattern of the caustic must be detectable along its full length on a planar and optically transparent side ($a$ x $b$) of the imaging body 5, the side being parallel to the propagation axis of the measured laser beam 1. This side $a$ x $b$, from which the luminescence pattern is recorded, preferably has the dimension $b$ in the direction of the propagation axis of the measured laser beam 1 equal or bigger than triple Rayleigh length $b \geq 3x\, R_f$ Geometrical axes of the imaging body 5 can be generally oriented independently of the propagation axis of the measured laser beam, provided the above conditions are fulfilled.

The experimental setup in all examples corresponded to the arrangement shown in Fig. 2.

**Example 1**

A pulsed diode pumped solid-state laser generates nanosecond pulses of radiation having the wavelength of 1030 nm and average output power 50 W, pulsing frequency is 10 Hz. The imaging body 5 is a transparent ceramic plate doped with $Er^{3+}$ and $Yb^{3+}$, photosensitive for frequency range of 900 nm to 1070 nm with upconversion emission in the range of 550 nm to 660 nm. The minimum sensitivity is 15 mW/mm$^2$ for 1060 nm, damage threshold is 110 w/mm$^2$ of continuous power.

The photodetector 4 is a CMOS camera with a spectral sensitivity range 400 nm to 900 nm.

The apparatus further contains a switching unit 7 for synchronizing the recording periods of the photodetector with the pulse frequence of the laser. The apparatus measures with the frequency of 10 Hz corresponding to the pulse frequency of the laser source.

The results of the measurement correspond to the results obtained using a commercially available apparatus. The quality parameter $M^2$ values of the laser beam obtained from single pulses allow to observe fluctuations between the pulses while the values obtained by the classical method correspond to average values.

**Example 2**

Er:glass fiber laser generates radiation having the wavelength of 1.55 $\mu$m of continuous output power 1 W.

The imaging body 5 is a prism having two mutually perpendicular polished planes (base and side) made of a monocrystal doped with samarium ions Sm:YAG.

The photodetector 4 is a CCD camera with a controlled shutter.

The quality parameter $M^2$ values of the laser beam obtained from each recorded image with a variable integration period correspond to values obtained using a classical, commercially available apparatus.

**Example 3**

Optical parametrical amplifier emitting picosecond pulses having the wavelength of 800 nm and average output power 5 W with a pulse frequency of 10 kHz.

The imaging body 5 is a partially truncated and polished rod made of $Yb^{3+}$-doped borosilicate glass.

The photodetector 4 is a pixel detector array. The apparatus further comprises an optical system transmitting the fluorescent pattern onto the pixel detector array of the size 1 x 10. The photodetector has an integrated recording and assessment unit.

The quality parameter $M^2$ values of the laser beam obtained from a sequence of continually recorded pulses correspond to the values obtained using a classical, commercially available apparatus.

**Example 4**

Excimer laser having the wavelength of 250 nm and the pulse frequency of 1 Hz.

The fluorescent pattern is detected using an irregular column-shaped body having two mutually perpendicular planes (base and side) with the dimensions corresponding to the conditions defined above (other sides are not specifically surface-machined). The body is made of cerium-doped crystal of lutecium aluminium garnet Ce:LuAG.

The photodetector 4 is a CCD camera with a shutter. The apparatus further contains a switching unit 7 for synchronizing the photodetector with the laser source.

The quality parameter $M^2$ values of the laser beam obtained from each single shot recorded image correspond to the values obtained using a classical, commercially available apparatus. Similarly to Example 1, the apparatus and method according to the invention allow to observe fluctuations between the pulses while the values obtained by the classical method and apparatus correspond to average values.

**Example 5**

A high-output power PALS-type laser source generates a laser pulse having the energy of the order of magnitude of kJ. Single pulses are repeated once in about 20 minutes. The wavelength of the radiation is 1315 nm.

A beam splitter is provided before the focusing optics 3 (it can be a part of the mirror system 2) for controlling the radiation power output entering the apparatus.

The imaging body 5 is an octagonal prism fulfilling the conditions imposed by the independent claim, made of erbium-ion-doped yttrium aluminium perovskite ceramic (Er:YAP).

The photodetector 4 is a CCD camera with a shutter. The apparatus further contains a switching unit 7 for synchronizing the photodetector with the laser source, and also an assessment unit in the form of a computer with commercially available software.

The quality parameter $M^2$ values of the laser beam obtained from each single shot recorded image correspond to the values obtained using a classical, commercially available apparatus in a sequence of pulses, but the invention provides the option to observe the fluctuations between individual pulses. The possibility to evaluate the quality parameter $M^2$ in a single-shot arrangement is essential for optimization of a laser source used in the single-shot regimen.

The drawings and examples shown herein should not be construed as limiting the scope of the invention; they serve solely the purpose of further illustrating the invention.

Industrial Applicability

The laser beam quality is an essential parameter for many industrial and research applications. High-power ultrashort pulse laser systems show quality fluctuations between individual pulses during longer time periods, hence, the ability to monitor the beam quality (by means of the $M^2$ parameter) in each individual pulse with a quick assessment and feedback is needed in order to allow correction of the changes in the laser system to provide a stable laser beam quality for the desired application.

**Claims**

1.  An apparatus for single shot measurement of laser beam (1) quality parameter $M^2$, which contains a focusing optical system (3) for focusing the measured laser beam (1), a photodetector (4) and an assessment unit (6) for analysis and assessment of a luminescence pattern, said assessment unit being connected to the photodetector, **characterized in that** an imaging body (5) is arranged between the focusing optical system (3) and the photodetector (4), said imaging body (5) being made of a material showing luminescence in the wavelength range of the measured laser beam (1) and having at least one planar base, the minimum cross-sectional dimension (*a*) of which is bigger or equal to the diameter ($d_0$) of the laser beam (1) entering the apparatus ($a \geq d_0$), and further having at least one planar side, wherein said base and said planar side are polished for optical transparency for the wavelength $\lambda$ of the measured laser beam (1), whereas the photodetector (4) is arranged for recording the luminescence pattern induced in the imaging body (5) by the measured laser beam (1) through at least one optically transparent side of the imaging body (5).

**2.** The apparatus according to claim 1, which further comprises an imaging optical system for transmission of the luminescence pattern onto the photodetector (4) surface, said imaging optical system being arranged between the imaging body (5) and the photodetector (4).

**3.** The apparatus according to any one of claims 1 or 2, wherein a beam splitter for regulation of the laser power output entering the apparatus is arranged before the focusing optical system (3).

**4.** The apparatus according to any one of claims 1 to 3, which further comprises a switching unit (7) for synchronization of the photodetector (4) with the measured laser beam (1) pulses.

**5.** The apparatus according to any one of claims 1 to 4, wherein the planar side has a dimension $b$ extending from the edge shared by the planar side and the base, whereas the dimension $b$ is equal or bigger than triple Rayleigh length ($b \geq 3x\ R_f$).

**6.** The apparatus according to any one of claims 1 to 5, wherein the shape of the imaging body (5) is such that a prism having the dimensions $a$ x $a$ x $b$ is inscribable into the imaging body (5), wherein $a \geq d_0$ and optionally $b \geq 3xR_f$, whereas the prism axis parallel with the edge of length $b$ is oriented co-axially with the focusing optical system (3) axis.

**7.** The apparatus according to any one of claims 1 to 6, wherein the imaging body (5) material is selected from the group comprising photosensitive glass, transparent ceramics or monocrystal with ion doping corresponding to the wavelength of the measured laser beam (1).

**8.** The apparatus according to any one of claims 1 to 7, wherein the photodetector (4) has a spatial resolution of at least 10 pixels for luminescence pattern detection which are arranged in the direction parallel to the propagation axis of the measured laser beam (1).

**9.** The apparatus according to any one of claims 1 to 8, wherein the photodetector (4) is a CCD camera, CMOS camera or a pixel photodetector array.

**10.** A method for single shot measurement of the laser beam (1) quality parameter $M^2$ without the need for positional change of the photodetector in relation to focusing optics, in an apparatus according to any one of the preceding claims, **characterized in that** the measured laser beam (1) having the wavelength in the VIS, IR or UV spectral region is focused by the focusing optics system (3) and enters an imaging body (5) so that the caustic beam waist of the focused measured laser beam (1) is located within the imaging body material, said imaging body (5) being made of a material showing luminescence in the wavelength range of the measured laser beam (1) and having at least one planar base substantially perpendicular to the propagation axis of the measured laser beam (1), the minimum cross-sectional dimension ($a$) of said base being bigger or equal to the diameter ($d_0$) of the laser beam (1) entering the apparatus ($a \geq d_0$), and said imaging body (5) further having at least one planar side substantially parallel with the propagation axis of the measured laser beam (1), whereas said planar base and said planar side are polished into optically transparent planes, whereas a luminescence pattern is formed in said imaging body (5), and said luminescence pattern is detected and assessed.

**11.** The method according to claim 10, wherein the planar side has a dimension $b$ extending from the edge shared by the planar side and the base, whereas the dimension $b$ is equal or bigger than triple Rayleigh length ($b \geq 3x\ R_f$).

**12.** The method according to claim 10 or 11, wherein from the obtained luminescence pattern, the cross-sectional dimension $d_f$ in various points of the caustic is obtained and $M^2$ is calculated as follows:

$$M^2 = \frac{\pi}{4\lambda} d_f \theta_f$$

wherein the parameter $\Theta_f$ is determined by the focusing optics properties in the apparatus.

**Fig. 1**

**Fig. 2**

**Fig. 3a**

**Fig. 3b**

**Fig. 3c**

**Fig. 3d**

**Fig. 3e**

**Fig. 3f**

**EP 2 952 861 A1**

## EUROPEAN SEARCH REPORT

Application Number

EP 15 00 1590

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 792 690 A (MCCANN MICHAEL P [US] ET AL) 20 December 1988 (1988-12-20) * claims 5, 7 * * figures 1, 4 * * column 1, line 61 - line 63 * * column 3, line 9 - line 11 * ----- | 1 | INV. G01J1/42 G01J1/58 |
| Y | KELLY C JORGE ET AL: "Scattered light imaging method (SLIM) for characterization of arbitrary laser beam intensity profiles", APPLIED OPTICS, OPTICAL SOCIETY OF AMERICA, WASHINGTON, DC; US, vol. 53, no. 20, 2 June 2014 (2014-06-02), pages 4555-4564, XP001590773, ISSN: 0003-6935, DOI: 10.1364/AO.53.004555 [retrieved on 2014-07-09] * figures 1, 3, 6; table 2 * ----- -/-- | 1-12 | |

TECHNICAL FIELDS SEARCHED (IPC)

G01J

The present search report has been drawn up for all claims

| Place of search | Date of completion of the search | Examiner |
|---|---|---|
| Munich | 20 October 2015 | Parise, Berengere |

EPO FORM 1503 03.82 (P04C01)

Europäisches
Patentamt
European
Patent Office
Office européen
des brevets

**EUROPEAN SEARCH REPORT**

Application Number

EP 15 00 1590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kelly Jorge ET AL: "M2 beam quality measurement of a single pulse of the Nd:YAG laser", Proceedings of the Fifth International WLT-Conference on Lasers in Manufacturing 2009, 1 June 2009 (2009-06-01), XP055222038, Retrieved from the Internet: URL:https://www.researchgate.net/profile/R udimar_Riva/publication/259145345_M_beam_q uality_measurement_of_a_single_pulse_of_th e_NdYAG_laser/links/02e7e52a06b86d16520000 00.pdf?origin=publication_detail&ev=pub_in t_prw_xdl&msrp=vYI1BPBD9FR6eiHCj08g5AgH2AQ 13nE_IpwhEEuQsOUy8jYyKUTCz4T-C6DVILZi4o6eU DOovZEb_0M [retrieved on 2015-10-19] * page 3, column 2, line 18 - line 20 * * page 3, column 2, last paragraph before section 3 * ----- | 1-12 | |
| Y | DE 37 38 480 A1 (LAMBDA PHYSIK FORSCHUNG [DE]) 24 May 1989 (1989-05-24) * claim 1 * * column 3, line 39 - line 40 * ----- | 1-12 | **TECHNICAL FIELDS SEARCHED (IPC)** |
| Y | US 5 461 234 A (MIYAZAKI KENZO [JP] ET AL) 24 October 1995 (1995-10-24) * figure 5b * ----- | 1-12 | |

The present search report has been drawn up for all claims

| Place of search | Date of completion of the search | Examiner |
|---|---|---|
| Munich | 20 October 2015 | Parise, Berengere |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 15 00 1590

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2015

| Patent document cited in search report | | Publication date | Patent family member(s) | | Publication date |
|---|---|---|---|---|---|
| US 4792690 | A | 20-12-1988 | NONE | | |
| DE 3738480 | A1 | 24-05-1989 | NONE | | |
| US 5461234 | A | 24-10-1995 | JP | H0599740 A | 23-04-1993 |
| | | | JP | H0641885 B2 | 01-06-1994 |
| | | | US | 5461234 A | 24-10-1995 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101393050 A
- JP 2006054480 A
- US 8427633 B

**Non-patent literature cited in the description**

- **J. V. SHELDAKOVA et al.** Beam quality measurements with Shack-Hartmann wavefront sensor and M2-sensor: comparison of two methods. *Proc. SPIE 6452,* 2007, 645207
- **A. M. CARRY et al.** Instantaneous Measurement of M2 Beam propagation ration in real time. *Ophir Photonics*
- **J. A. RUFF.** Single-pulse laser beam quality measurements using a CCD camera system. *Applied Optics,* 1992, vol. 31 (24
- **R. CORTÉS.** Laser beam quality factor measured by distorted fresnel zone plates. *Rev. Mex. Fis.,* 2008, 54
- **K. C. JORGE et al.** Real-time measurement of laser beam quality factor (M2) by imaging transverse scattered radiation. *Proc. SPIE,* 2007, vol. 6452